# EUROPÄISCHE PATENTSCHRIFT

(11) **EP 1 832 447 B1**
(45) Veröffentlichungstag und Bekanntmachung des Hinweises auf die Patenterteilung: **14.04.2010**
(21) Anmeldenummer: 07004339.3
(22) Anmeldetag: 02.03.2007
(51) Int. Cl.: B60G 7/00

(54) **Querlenker**
Transverse control arm
Bras oscillant transversal

(30) Priorität: 08.03.2006 DE 102006011107
(43) Veröffentlichungstag der Anmeldung: 12.09.2007
(73) Patentinhaber: Benteler Automobiltechnik GmbH, 33102 Paderborn (DE)
(72) Erfinder: Böke, Johannes, 32825 Blomberg (DE); Rethfeldt, Jens, 33098 Paderborn (DE); Wienströer, Martin, 33334 Gütersloh (DE); Wileschek, Tobias, 33014 Bad Driburg (DE)
(74) Vertreter: Griepenstroh, Jörg

(56) Entgegenhaltungen:
- EP-A- 1 346 855
- EP-A- 1 619 055
- EP-A1- 0 733 499
- EP-A1- 0 760 300
- EP-A2- 0 794 075
- EP-A2- 1 223 058
- WO-A-01/42034
- DE-A1- 19 522 916
- DE-A1-102004 009 722
- DE-A1-102004 039 175
- GB-A- 540 646
- JP-A- 58 188 712
- JP-A- 2004 262 453

## Beschreibung

Die Erfindung betrifft einen Querlenker einer Radaufhängung eines Kraftfahrzeugs mit den Merkmalen im Oberbegriff des Patentanspruchs 1.

Ein Querlenker ist Teil der Radaufhängung von zweispurigen Kraftfahrzeugen. Er ist quer zur Fahrtrichtung eingebaut, wobei je nach Bauform der Radaufhängungen I-, V- oder L-förmige Querlenker zum Einsatz kommen. Ein L- oder V-förmiger Querlenker ist um eine Schwenkachse beweglich, um vertikale Bewegungen des Federbeins zuzulassen. Querlenker unterliegen beim Bremsen, Beschleunigen und bei der Kurvenfahrt hohen Belastungen. Querlenker müssen daher in bestimmten Kraftangriffsrichtungen besonders steif sein, dürfen allerdings kein zu hohes Gewicht besitzen.

Es sind Querlenker in mehrschaliger und einschaliger Bauweise bekannt. Durch die EP 0 733 499 B1 zählt z.B. ein Querlenker in einschaliger Bauweise zum Stand der Technik, dessen Seitenbereiche zur Aussteifung zweifach umgestellt sind, so dass die freien Enden der Seitenstege einander zugewandt sind. In der DE 697 05 144 T2 wird ein Querlenker mit verstärkten Außenrändern beschrieben, wobei die Verstärkungen im Gabelungsbereich des L-förmigen Querlenkers ausgespart werden. Konkret wird vorgeschlagen, die Enden der Seitenstege umzustellen und die Bodenplatte des Querlenkers mit randseitigen Sicken zu versehen. In der Praxis hat sich jedoch gezeigt, dass endseitig umgestellte Seitenstege dazu führen, dass sich korrosive Materialien wie Schmutz und beispielsweise Streusalz ablagern. Diese Schmutz schöpfenden Konstruktionen führen zwangsläufig zu korrosionsanfälligen Bereichen, die bei einem derart hoch belasteten Fahrwerksbauteil wie einem Querlenker vermieden werden sollten. Da an den Außenrändern der Querlenker jedoch die höchsten Spannungen auftreten, sind allerdings steifigkeitserhöhende Maßnahmen erforderlich. Denkbar wäre z.B. eine Schweißkonstruktion, was allerdings mit einer unerwünschten Erhöhung des Bauteilgewichts einhergeht, da für zweischalige Querlenker mit geschlossenem Querschnitt regelmäßig mehr Material erforderlich ist als für einen einschalig ausgebildeten Querlenker.

Die gattungsbildende DE 10 2004 009 722 A1 offenbart einen Radführungslenker der in Rede stehenden Bauart, dessen gegenüberliegende Schenkelbereiche asymmetrisch gestaltet sein sollen. Die Asymmetrie wird dadurch erreicht, dass endseitige Umstellungen oder auch Einprägungen an den Schenkelbereichen unsymmetrisch ausgebildet sind. Eine Ausführungsform, wobei die Einprägungen sich gegenüberliegender Seitenstege in die gleiche Richtung ausgestellt sind, wird aber nicht gezeigt.

Im Rahmen der Erfindung soll ein Querlenker aufgezeigt werden, der durch kostengünstiges Pressformen aus einem Flachmaterial in einschaliger Bauweise hergestellt und bei möglichst geringem Gewicht ein hohes Widerstandsmoment gegen Knicken aufweist, wobei die Seitenstege des Schalenkörpers zugleich frei von Schmutz schöpfenden Bereichen sind.

Diese Aufgabe ist bei einem Querlenker mit den Merkmalen des Patentanspruchs 1 gelöst.

Vorteilhafte Weiterbildungen des Erfindungsgedankens sind Gegenstand der Unteransprüche.

Wesentlich bei dem erfindungsgemäßen Querlenker ist zum einen, dass die freien Endabschnitte der Seitenstege umstellungsfrei sind. Das heißt, dass sie weder teilweise noch vollständig in einer Art und Weise umgebördelt sind, dass die Stirnseite der Seitenstege entweder nach innen oder außen in Richtung des Basisabschnitts weist. Da allerdings an den Außenrändern des Basisabschnitts hohe Belastungen auftreten, ist vorgesehen, dass die Seitenstege zwischen ihren freien Endabschnitten und ihren an den Basisabschnitt anschließenden oberen Stegabschnitten Einprägungen aufweisen. Durch diese Einprägungen wird die Steifigkeit der Seitenstege und damit des gesamten Querlenkers signifikant erhöht. Die Einprägungen führen zu keiner Erhöhung des Gewichts des Querlenkers und führen vor allen Dingen zu keinen geschlossenen Querschnitten oder zu Schmutz schöpfenden Bereichen, wie es bei einer endabschnittsseitigen Umstellung oder Umbörderlung der Fall sein kann. Mit der Erfindung wird ein Querlenker mit einem hohen Widerstandsmoment gegen Knicken und Beulen geschaffen, der aufgrund seiner hohen Steifigkeit zur Verbesserung des Fahrverhaltens beiträgt.

Vorteilhafterweise sind die Einprägungen in der gesamten Längserstreckung der Seitenstege ausgebildet. Insbesondere ist bei einem L-förmig konfigurierten Schalenkörper vorgesehen, dass die Einprägungen auch in dem Übergangsbereich desjenigen Seitenstegs vorgesehen sind, der sich von dem bogenförmigen Schwingarm zu dem von dem bogenförmigen Schwingarm abzweigenden Nebenarm erstreckt. Dadurch sind sämtliche Seitenstege in ihrer gesamten Längserstreckung mit Einprägungen versehen.

Die Einprägungen in sich gegenüber liegenden Seitenstegen sind gemäss der Erfindung in die gleiche Richtung ausgestellt.

Bei den Einprägungen handelt es sich vorzugsweise um in Längsrichtung der Stegabschnitte verlaufende Sicken. Derartige Sicken können sich über die gesamte Länge der Seitenstege erstrecken. Die Sicken sind zur Vermeidung von Schutzansammlungen so ausgebildet, dass die durch die Sicken bedingte Hinterschneidung an den Seitenstegen möglichst gering ist. Zumindest sollte sichergestellt sein, dass die Sicken eine Kontur besitzen, die dauerhafte Ablagerungen von körnigen Verschmutzungen unmöglich macht. Hierzu können die Sicken gerundete Flanken aufweisen, die in einem möglichst stumpfen Winkel zur Ebene des Basisabschnitts ausgerichtet sind.

Um möglichst wenig Bauraum zu beanspruchen ist vorgesehen, dass der obere Stegabschnitt und der untere freie Endabschnitt eines Seitenstegs in einer Ebene verlaufen. Diese Ebene steht vorzugsweise senkrecht zu der Ebene des Basisabschnitts. Zwischen dem oberen Stegabschnitt und dem unteren Endabschnitt befindet sich die Einprägung vorzugsweise in mittlerer Höhe des Seitenstegs. Die Tiefe der Einprägung kann etwa der Materialdicke des Schalenkörpers entsprechen.

Die Geometrie des Schalenkörpers bzw. der Grundplatte spielt bezüglich der erfindungsgemäßen Lösung eine untergeordnete Rolle. Der Schalenkörper kann daher beispielsweise auch V-förmig oder I-förmig konfiguriert sein je nach Konfiguration der Radaufhängung.

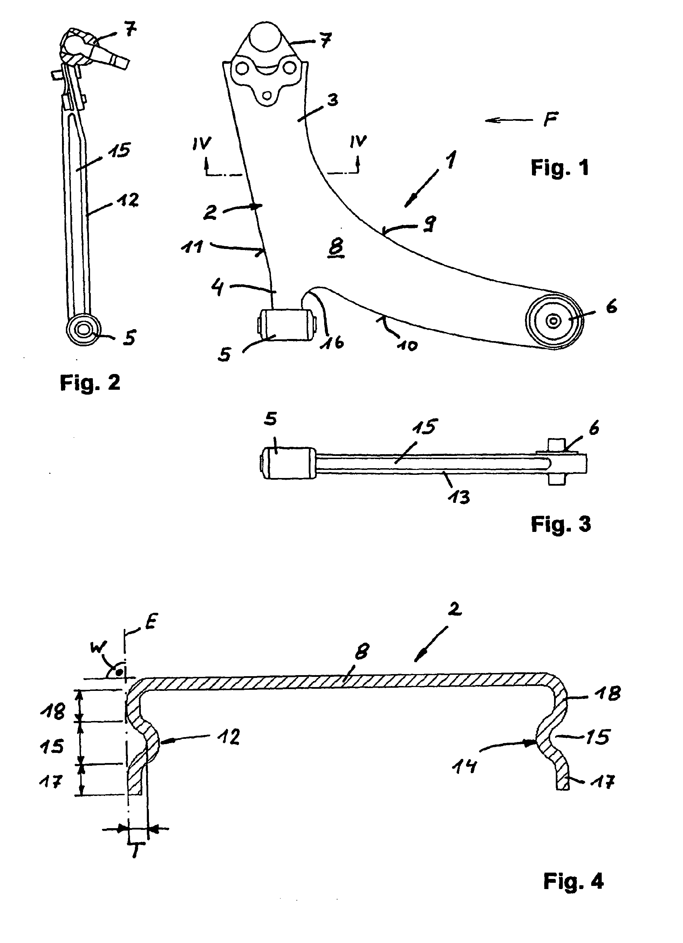

Die Erfindung wird nachfolgend anhand eines in den Figuren 1 bis 4 dargestellten Ausführungsbeispiels näher erläutert, wobei die Richtung, in welche die Einprägungen ausgestellt sind, beispielhaft gewählt ist und wobei die Erläuterungen analog auch für in die gleiche Richtung weisende Einprägungen Gültigkeit haben. Es zeigen:
- Figur 1: eine Draufsicht auf einen L-förmig konfigurierten Querlenker;
- Figuren 2 und 3: Seitenansichten des Querlenkers der Figur 1 und
- Figur 4: einen Querschnitt nach dem Stand der Technik entlang der Linie lV-lV durch den Querlenker der Figur 1.

Figur 1 zeigt einen Querlenker 1 als Bestandteil einer nicht näher dargestellten Radaufhängung eines Kraftfahrzeugs. Der Querlenker dient zur Abstützung des rechten Vorderrads eines Kraftfahrzeugs, wobei der Pfeil F die Fahrtrichtung des Kraftfahrzeugs anzeigt.

Der L-förmig konfigurierte Querträger 1 setzt sich aus einem im Querschnitt U-förmig konfigurierten Schalenkörper 2, der durch Pressformen eines Metallblechs hergestellt ist, und Lagern zusammen. Der Schalenkörper 2 umfasst einen bogenförmigen Schwingarm 3 und einen hiervon abzweigenden Nebenarm 4. An jedem freien Ende der Arme 3, 4 befindet sich ein Lager 5, 6, 7. Das in der Bildebene obere Lager 7 wird mit dem Radträger gekoppelt, während die in der Bildebene unteren Lager 5, 6 mit der Karosserie verbunden werden. Während der Fahrt greifen durch Bremsungen und Beschleunigungen sowie durch Kurvenfahrten hohe Kräfte am Querlenker 1 an, wobei diese Kräfte durch den im Wesentlichen flächigen Basisabschnitt 8 übertragen werden. Die höchsten Spannungen treten dabei an dessen Außenrändern 9, 10, 11 auf. Wie anhand der Figuren 2 und 3 zu erkennen ist, sind die Außenränder 9, 10, 11 durch gegenüber dem Basisabschnitt 8 nach unten abgewinkelte Seitenstege 12, 13, 14 verstärkt.

Wesentlich bei den Seitenstegen 12, 13, 14 ist, dass sie jeweils Einprägungen 15 in Form von in Längsrichtung der Seitenstege verlaufende Sicken aufweisen. Sämtliche Einprägungen 15 sind in diesem Ausführungsbeispiel gleich konfiguriert, das heißt, die Seitenstege 12, 13, 14 besitzen die gleiche Geometrie unabhängig von der Lage der Schnittebene.

Anhand der Figur 2 ist zu erkennen, dass die Einprägung 15 im Seitensteg 12 sich so weit wie möglich zwischen den Lagern 5, 7 erstreckt. Gleiches gilt auch für die Sicke 15 in dem Seitensteg 13, wie er in Figur 3 zu erkennen ist. Auch dort erstreckt sich die Einprägung 15 über die gesamte Länge des Seitenstegs 13 und auch bis in den Übergangsbereich 16 zum Lager 5. Figur 3 zeigt, dass sich die Einprägung 15 so weit wie möglich in Richtung des Lagers 6 erstreckt, wobei das Lagerauge den Schalenkörper 2 anders als bei den weiteren Lagern 5, 7 unmittelbar durchsetzt. Im endseitigen Bereich des Lagerauges ist keine weitere Aussteifung des Basisabschnitts durch verstärkte Seitenstege erforderlich. Folglich läuft die Einprägung 15 im Bereich des Lagerauges des Lagers 6 aus.

Details der Gestaltung der Seitenstege 12, 14 nach dem Stand der Technik werden anhand der Figur 4 deutlich. Die Seitenstege 12, 14 liegen in einer Ebene E und sind im rechten Winkel W gegenüber dem in diesem Ausführungsbeispiel eben ausgestalteten Basisabschnitt 8 abgewinkelt. Der Basisabschnitt 8 kann im Bereich seiner Außenränder 9, 10, 11 zusätzlich mit entlang der Kontur der Außenränder 9, 10, 11 verlaufenden Sicken versehen sein, um dem Schalenkörper 2 eine zusätzliche Steifigkeit zu verleihen. Insgesamt ist der Basisabschnitt 8 des Schalenkörpers 2 jedoch im Wesentlichen eben.

Die Stegabschnitte 12, 14 nach dem Stand der Technik sind spiegelbildlich konfiguriert und weisen jeweils nach innen gerichtete Einprägungen 15 auf. Das heißt, die Einprägungen 15 sind in entgegengesetzte Richtungen ausgestellt. Die erfindungsgemässen Einprägungen sind in die gleiche Richtung ausgestellt. Die Einprägungen 15 befinden sich jeweils zwischen den freien Endabschnitten 17 der Seitenstege 12, 14 und den den Basisabschnitt 8 benachbarten oberen Stegabschnitten 18. Der obere Stegabschnitt 18 und der freie Endabschnitt 17 besitzen etwa die gleiche Länge, so dass sich die Einprägung 15 etwa mittig in den Seitenstegen 12, 14 befinden. Die Tiefe T der Einprägungen 15 ist in diesem Ausführungsbeispiel etwas größer als die Wanddicke des Schalenkörpers 2. Die Tiefe T entspricht etwa dem 1,5-fachen der Wanddicke des Schalenkörpers 2.

Es ist nur eine einzige sickenförmige Einprägung 15 über die Höhe eines jeden Seitenstegs 12, 13, 14 vorgesehen. Die Einprägung 15 ist aufgrund der sich zu dem freien Endabschnitt 17 und dem oberen Stegabschnitt 18 anschließenden Rundungen im Querschnitt etwa glockenkurvenförmig, das heißt insgesamt gerundet. Dadurch können sich etwaige grobkörnige Ablagerungen nicht dauerhaft im von den Seitenstegen 12, 13, 14 umschlossenen Bereich des Querlenkers 1 anlagern und fallen durch die schwingende Bewegung des Querlenkers 1 früher oder später selbsttätig ab. Auf diese Weise können Korrosionen des Querlenkers 1 vermieden werden.

### Bezugszeichen:

- 1 -: Querlenker
- 2 -: Schalenkörper
- 3 -: Schwingarm
- 4 -: Nebenarm
- 5 -: Lager
- 6 -: Lager
- 7 -: Lager
- 8 -: Basisabschnitt v. 2
- 9 -: Außenrand v. 2
- 10 -: Außenrand v. 2
- 11 -: Außenrand v. 2
- 12 -: Seitensteg
- 13 -: Seitensteg
- 14 -: Seitensteg
- 15 -: Einprägung
- 16 -: Übergangsbereich
- 17 -: freier Endabschnitt
- 18 -: oberer Stegabschnitt

- E -: Ebene
- F -: Fahrtrichtung
- T -: Tiefe
- W -: Winkel

## Patentansprüche

1. Querlenker einer Radaufhängung eines Kraftfahrzeugs, welcher einen einschaligen, im Querschnitt U-förmig konfigurierten, aus einem Flachmaterial durch Pressformen hergestellten Schalenkörper (2) aus Metallblech aufweist, wobei der Schalenkörper (2) wenigstens einen Arm (3, 4) mit einem Basisabschnitt (8) aufweist, an dessen Außenrand (9, 10, 11) sich gegenüber dem Basisabschnitt (8) abgewinkelte Seitenstege (12, 13, 14) mit freien Endabschnitten (17) anschließen, wobei die freien Endabschnitte (17) der Seitenstege (12, 13, 14) umstellungsfrei sind, und wobei die Seitenstege (12, 13, 14) zwischen ihren freien Endabschnitten (17) und ihren an den Basisabschnitt (8) anschließenden, oberen Stegabschnitten (18) Einprägungen (15) aufweisen, **dadurch gekennzeichnet, dass** die Einprägungen sich gegenüberliegender Seitenstege in die gleiche Richtung ausgestellt sind.

2. Querlenker nach Anspruch 1, **dadurch gekennzeichnet, dass** die Einprägungen (15) in der gesamten Längserstreckung der Seitenstege (12, 13, 14) ausgebildet sind.

3. Querlenker nach Anspruch 1 oder 2, **dadurch gekennzeichnet, dass** die Einprägungen (15) als in Längsrichtung der Seitenstege (12, 13, 14) verlaufende Sicken ausgebildet sind.

4. Querlenker nach einem der Ansprüche 1 bis 3, **dadurch gekennzeichnet, dass** der obere Stegabschnitt (18) und der freie Endabschnitt (17) eines Seitenstegs (12, 13, 14) in einer Ebene (E) verlaufen.

5. Querlenker nach Anspruch 4, **dadurch gekennzeichnet, dass** die Seitenstege (12, 13, 14) im rechten Winkel (W) zum Basisabschnitt (8) ausgerichtet sind.

6. Querlenker nach einem der Ansprüche 1 bis 5, **dadurch gekennzeichnet, dass** der Schalenkörper (2) L-förmig konfiguriert ist, und einen bogenförmigen Schwingarm (3) und einen von dem Schwingarm (3) abzweigenden Nebenarm (4) aufweist.

7. Querlenker nach einem der Ansprüche 1 bis 5, **dadurch gekennzeichnet, dass** der Schalenkörper (8) V-förmig konfiguriert ist.

8. Querlenker nach einem der Ansprüche 1 bis 6, **dadurch gekennzeichnet, dass** der Schalenkörper (8) I-förmig konfiguriert ist.

## Claims

1. Transverse control arm of a wheel suspension of a motor vehicle, which has a shell body (2) which is single-shell, having the configuration of a U-shaped cross-section, produced from a flat material by press moulding from sheet metal, the shell body (2) having at least one arm (3, 4) with a base section (8), on the outer edge (9, 10, 11) of which lateral webs (12, 13, 14) which are angled with respect to the base section (8) are attached with free end sections (17), the free end sections (17) of the lateral webs (12, 13, 14) being conversion-free, and the lateral webs (12, 13, 14) having embossings (15) between their free end sections (17) and their upper web sections (18) attaching to the base section (8), **characterised in that** the embossings are presented in the same direction as opposing lateral webs.

2. Transverse control arm according to claim 1, **characterised in that** the embossings (15) are developed along the entire longitudinal extension of the lateral webs (12, 13, 14).

3. Transverse control arm according to claim 1 or 2, **characterised in that** the embossings (15) are developed as beads running in the longitudinal axis of the lateral webs (12, 13, 14).

4. Transverse control arm according to one of claims 1 to 3, **characterised in that** the upper web section (18) and the free end section (17) of a lateral web (12, 13, 14) run in one plane (E).

5. Transverse control arm according to claim 4, **characterised in that** the lateral webs (12, 13, 14) are oriented at a right angle (W) to the base section (8).

6. Transverse control arm according to one of claims 1 to 5, **characterised in that** the shell body (2) is configured in an L-shape, and has a curved rocker bar (3) and a secondary arm (4) branching off from the rocker bar (3).

7. Transverse control arm according to one of claims 1 to 5, **characterised in that** the shell body (8) is configured in a V-shape.

8. Transverse control arm according to one of claims 1 to 6, **characterised in that** the shell body (8) is configured in an I-shape.

## Revendications

1. Bras transversal d'une suspension de roue dans un véhicule automobile, qui comprend un corps (2) monocoque en forme de coque en tôle métallique, configuré avec une section en forme de U et réalisé à partir d'un matériau plat par mise en forme à la presse, dans lequel le corps (2) en forme de coque comprend au moins un bras (3, 4) avec un tronçon de base (8), à la bordure extérieure (9, 10, 11) duquel se raccordent des barrettes latérales (12, 13, 14) formant un angle par rapport au tronçon de base (8) et comportant des tronçons d'extrémité libres (17), lesdits tronçons d'extrémité libres (17) des barrettes latérales (12, 13, 14) étant dépourvus d'adaptation, et lesdites barrettes latérales (12, 13, 14) comprennent, entre leur tronçon d'extrémité libre (17) et leur tronçon supérieur (18) qui se raccorde au tronçon de base (8), des empreintes (15), **caractérisé en ce que** les empreintes de barrettes latérales opposées sont rabattues dans la même direction.

2. Bras transversal selon la revendication 1, **caractérisé en ce que** les empreintes (15) sont réalisées dans l'extension longitudinale totale des barrettes latérales (12, 13, 14).

3. Bras transversal selon la revendication 1 ou 2, **caractérisé en ce que** les empreintes (15) sont réalisées sous forme de nervures qui s'étendent dans la direction longitudinale des barrettes latérales (12, 13, 14).

4. Bras transversal selon l'une des revendications 1 à 3, **caractérisé en ce que** le tronçon de barrette supérieur (18) et le tronçon d'extrémité libre (17) d'une barrette latérale (12, 13, 14) s'étendent dans un plan (E).

5. Bras transversal selon la revendication 4, **caractérisé en ce que** les barrettes latérales (12, 13, 14) sont orientées à angle droit (W) par rapport au tronçon de base (8).

6. Bras transversal selon l'une des revendications 1 à 5, **caractérisé en ce que** le corps (2) en formelle coque est configuré avec une forme en L, et comprend un bras oscillant (3) en forme d'arc, et un bras auxiliaire (4) ramifié depuis le bras oscillant (3).

7. Bras transversal selon l'une des revendications 1 à 5, **caractérisé en ce que** le corps (8) en forme de coque est configuré avec une forme en V.

8. Bras transversal selon l'une des revendications 1 à 6, **caractérisé en ce que** le corps (8) en forme de coque est configuré avec une forme en I.
